# EUROPÄISCHE PATENTSCHRIFT

(11) **EP 3 542 986 B1**
(45) Veröffentlichungstag und Bekanntmachung des Hinweises auf die Patenterteilung: **27.10.2021**
(21) Anmeldenummer: 18210952.0
(22) Anmeldetag: 07.12.2018
(51) Int. Cl.: B29C 49/46, B29C 49/58, B29C 49/06, B29C 49/12, B29C 49/36, B29L 31/00

(54) **VORRICHTUNG ZUM UMFORMEN UND BEFÜLLEN VON KUNSTSTOFFBEHÄLTNISSEN MIT GESTEUERTER EINFÜLLUNG**
DEVICE FOR FORMING AND FILLING PLASTIC CONTAINERS WITH CONTROLLED FILLING
DISPOSITIF DE FORMAGE ET DE REMPLISSAGE DE RÉCIPIENTS EN MATIÈRE PLASTIQUE À REMPLISSAGE COMMANDÉ

(30) Priorität: 23.03.2018 DE 102018106930
(43) Veröffentlichungstag der Anmeldung: 25.09.2019
(73) Patentinhaber: Krones AG, 93073 Neutraubling (DE)
(72) Erfinder: Kitzinger, Thomas, 93073 Neutraubling (DE); Hanesch, Cora, 93073 Neutraubling (DE); Finger, Dieter, 93073 Neutraubling (DE); Meier, Dominik, 93073 Neutraubling (DE); Pense, Andreas, 93073 Neutraubling (DE); Vornehm, Andreas, 93073 Neutraubling (DE); Betz, Christian, 93073 Neutraubling (DE)
(74) Vertreter: Bittner, Bernhard

(56) Entgegenhaltungen:
- EP-A1- 2 987 619
- DE-A1-102015 016 124
- US-A1- 2015 298 828

## Beschreibung

Die vorliegende Erfindung bezieht sich auf eine Vorrichtung und ein Verfahren zum Befüllen und Expandieren von Kunststoffbehältnissen. Aus dem Stand der Technik ist es seit Langem bekannt, dass zur konventionellen Herstellung von gefüllten Kunststoffflaschen üblicherweise in einem ersten Arbeitsschritt die Flaschen aus Kunststoffvorformlingen geformt werden und anschließend in einem zweiten Arbeitsschritt mit dem abzufüllenden Produkt gefüllt werden. Insoweit sind zahlreiche Verfahren und Vorrichtungen bekannt.

Dokument EP 2 987 619 A1 zeigt eine Formfüllmaschine sowie ein Verfahren zur Herstellung eines Kunststoffbehälters und dessen Befüllung mit mindestens einem Füllprodukt. Das zumindest teilweise Herstellen des Kunststoffbehälters durch Beaufschlagen des Preforms erfolgt dabei mit einem Füllprodukt mit einer ersten Temperatur, wobei der Kunststoffbehälter innerhalb der Form zumindest teilweise mit einem Füllprodukt mit einer zweiten, niedrigeren Temperatur befüllt wird.

Dokument US 2015/298828 A1 zeigt ein Verfahren und eine Vorrichtung zur Herstellung von mit einem flüssigen Füllgut gefüllten Behältern 11 aus Vorformlingen 2, wobei der jeweilige Vorformling 2 thermisch konditioniert und anschließend während einer Form- und Füllphase in einer Form 37 mit wenigstens einem flüssigen Füllgut 21, 21.1 als Druckmedium in den Behältern umgeformt wird. Das Füllgut 21, 21.1 oder Anteile des Füllguts 21, 21.1 werden dabei zumindest in zwei Zeitpunkten und/ oder in zumindest zwei Prozessphasen mit unterschiedlichen Gehalten an Kohlendioxid und/oder mit unterschiedlichen Temperaturen zugeführt, wobei in der zweiten Prozessphase Trockeneis 71. insbesondere in Form von Pellets, zugeführt wird.

In jüngerer Zeit sind auch Verfahren bekannt geworden, bei denen die Kunststoffflaschen im selben Arbeitsschritt geformt und befüllt werden. Dies bedeutet, dass die Umformung des Kunststoffvorformlings durch das zu befüllende Produkt selbst stattfindet. Zu dieser Technologie sind bereits grundlegende Patentanmeldungen bekannt, wie beispielsweise die WO 03095179. Dabei ist eine Formstation vorgesehen, die eine ihr alleine zugewiesene Druckerzeugungseinheit aufweist, welche wiederum einen Zylinder und einen durch Druckluft angetriebenen Kolben aufweist. Auch ist es bekannt, die Druckerzeugung in Form einer Pumpe zu gestalten.

Um die Ausstoßraten von Anlagen zur Herstellung von gefüllten Kunststoffbehältnissen zu erhöhen, werden die Prozessschritte üblicherweise parallelisiert, das heißt die seriell erhitzten Kunststoffvorformlinge werden in mehreren Formstationen gleichzeitig zu Behältern ausgeformt, was in der Regel hier direkt mit dem abzufüllenden Produkt erfolgt.

Dabei ist es denkbar, dass die Formstationen auf einer Kreisbahn angeordnet sind und der gesamte Aufbau in Rotation versetzt wird, sodass an einer Eingabestelle die erhitzten Kunststoffrohlinge in die Form eingesetzt werden und an der Ausgabestelle die fertig geformten und befüllten Behältnisse entnommen werden.

Während der Kreisbewegung zwischen der Eingabe- und der Ausgabestelle findet ein Form- und Füllprozess auf einem rotierenden Form- und Füllrad statt. Aus dem internen Stand der Technik ist es dabei auch bekannt, eine externe Druckerzeugung beispielsweise auf einem stehenden Teil einer Maschine vorzusehen, die in einen Druckspeicher oder einen Energiespeicher fördert.

Es ergibt sich keine Möglichkeit, die sich aufgrund des Druckes und der Querschnitte einstellenden Volumenströme in Richtung der Kunststoffvorformlinge in irgendeiner Weise zu kontrollieren oder zu drosseln. Daneben ist aus sicherheitstechnischer Sicht ein Durchflussbegrenzer vorteilhaft, der bei einer defekten Leitung oder bei ähnlichen Problemen nicht den gesamten Inhalt des Druckspeichers entleert, sondern frühzeitig in Störung geht.

Der vorliegenden Erfindung liegt daher die Aufgabe zugrunde, derartige Anlagen zum Füllen und Umformen von Kunststoffvorformlingen zu Kunststoffbehältnissen variabler zu gestalten und insbesondere auch bei einer zentralen Druckmediumversorgung variabler zu gestalten. Daneben sollen jedoch auch sicherheitstechnische Aspekte leichter berücksichtigt werden können.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Expandieren von Kunststoffvorformlingen zu Kunststoffbehältnissen mittels eines flüssigen Mediums und insbesondere mittels eines Füllprodukts weist mindestens eine bevorzugt wenigstens zwei Umformungsstationen auf, welche die Kunststoffvorformlinge mit dem flüssigen Medium befüllen und expandieren und wenigstens eine gemeinsame Zuführeinrichtung, welche beiden Umformungsstationen das flüssige Medium zuführt, wobei die Umformungsstationen jeweils Einfülleinrichtungen aufweisen (bzw. die wenigstens eine Umformungsstation eine Einfülleinrichtung aufweist), welche das flüssige Medium in die Kunststoffvorformlinge einführen.

Erfindungsgemäß weisen diese Umformungsstationen und/oder Einfülleinrichtungen (bzw. die wenigstens eine Umformungsstation (jeweils) eine Drosseleinrichtung auf, welche dazu geeignet und bestimmt ist, den in die Kunststoffvorformlinge eintretenden Volumenstrom der Flüssigkeit zu verändern.

Es wird daher vorgeschlagen, dass jeder Umformungsstation und/oder jeder Einfülleinrichtung eine Drossel- oder Regulierungseinrichtung zugeordnet ist bzw. eine derartige Einrichtung vorhanden ist, die eine Kontrolle des Einfüllstroms der Flüssigkeit in die Kunststoffvorformlinge erlaubt.

Weiterhin wird bevorzugt nicht nur eine gemeinsame Zuführeinrichtung zum Zuführen des fließfähigen bzw. flüssigen Mediums vorgesehen, sondern auch eine gemeinsame Druckerzeugungseinrichtung, insbesondere eine zentrale Produktkompression. Unter einem Verändern des Volumenstroms wird dabei nicht nur ein Öffnen oder Schließen eines Ventils verstanden, sondern auch eine tatsächliche Veränderung, beispielsweise eine beliebige Veränderung, eines Produktstroms, der in die Kunststoffbehältnisse gelangt. Weiterhin ist es möglich, dass jeder Produktstrom (zu jeder Station) unabhängig und stufenweise eingestellt werden kann.

Daneben könnte auch eine stufenlose Einstellung erfolgen, wobei hierbei besonders bevorzugt ein ermittelter Volumenstrom rückgeführt wird (closed loop). Bevorzugt wird dabei eine erste Messgröße und insbesondere eine direkte Messgröße wie z. B. der Volumenstrom und/oder der Druck gemessen. Dieser Wert wird bevorzugt zurückgeführt und auf Basis dieses Wertes erfolgt besonders bevorzugt eine Regelung.

Daneben oder zusätzlich wäre es auch denkbar, dass eine indirekte Messgröße gemessen wird wie etwa eine Strömungsgeschwindigkeit oder ein Druckabfall. Anhand dieses Wertes kann der Volumenstrom berechnet werden.

Bei einer bevorzugten Ausführungsform weist die Vorrichtung einen Träger auf, an dem die Umformungsstationen angeordnet sind. Dieser Träger ist bevorzugt ein beweglicher Träger und besonders bevorzugt ein drehbarer Träger. Besonders bevorzugt werden daher die Umformungsstationen entlang einer Kreisbahn transportiert. Bei einer weiteren vorteilhaften Ausführungsform weist die Zuführeinrichtung eine Ringleitung auf, von der aus bevorzugt die einzelnen Umformungsstationen versorgt werden können. Diese Ringleitung wiederum kann aus einem Produktreservoir versorgt werden.

Bei einer weiteren vorteilhaften Ausführungsform kann wiederum die Ringleitung aus einer Produktzuleitung versorgt werden, wobei bevorzugt eine Pumpeneinrichtung und/oder ein Druckspeicher vorgesehen ist. Vorteilhaft weist die Vorrichtung einen zentralen Druckspeicher auf, der dazu dient, um das abzufüllende Produkt unter Druck zur Verfügung zu stellen.

Bei einer weiteren vorteilhaften Ausführungsform weisen die Umformungsstationen Halteformen zum Halten der Kunststoffvorformlinge auf. Die Kunststoffvorformlinge werden dabei gegen Innenwandungen dieser Umformungsstationen bzw. Halteformen expandiert. Damit bilden bevorzugt die Halteformen entsprechende Negative ab, welche der Form der zu expandierenden Kunststoffbehältnisse bzw. Flaschen entsprechen.

Bei einer weiteren vorteilhaften Ausführungsform weisen die Umformungsstationen stangenartige Körper auf, die in die Kunststoffvorformlinge einführbar sind, um diese Kunststoffvorformlinge in deren Längsrichtung zu dehnen. Bei diesen Stangen kann es sich beispielsweise um sogenannte Reckstangen handeln. Bei einer besonders bevorzugten Ausführungsform sind die besagten Drosseleinrichtungen auch geeignet, diese stangenartigen Körper bzw. deren Bewegung in der Längsrichtung der Kunststoffvorformlinge zu führen.

Da es aufgrund verfahrenstechnischer Gegebenheiten durchaus wichtig ist, den Druckaufbau innerhalb der Kunststoffvorformlinge in einer einstellbaren Zeit und im Verlauf einstellen zu können, wird vorgeschlagen, dass bevor das Produkt in den Kunststoffvorformling eintritt, eine Möglichkeit vorhanden ist, diesen Druckaufbau zumindest zeitweise durch eine Drosselung der Geschwindigkeit und/oder eine Reduzierung des Druckniveaus zu beeinflussen. Bevorzugt ist die besagte Drosseleinrichtung dazu geeignet und bestimmt, eine Strömungsgeschwindigkeit und/oder ein Druckniveau der in den Kunststoffvorformling eintretenden Flüssigkeit zu verändern. So kann beispielsweise eine Fülleinrichtung bzw. ein Füllkopf mit einer Ringleitung oder einem Druckspeicher verbunden sein. In diesen Kopf könnte das Produkt eintreten. Bevorzugt liegt diese Fülleinrichtung mit einem Bereich an dem Kunststoffvorformling an.

Bei einer weiteren vorteilhaften Ausführungsform ist die Drosseleinrichtung dazu geeignet und/oder bestimmt, eine Strömungsgeschwindigkeit und/oder ein Druckniveau der in den Kunststoffvorformling eintretenden Flüssigkeit zu verändern. Dabei ist bevorzugt diese Drosseleinrichtung dazu geeignet und/oder bestimmt, diese Strömungsgeschwindigkeit und/oder das Druckniveau auch während des Abfüllvorgangs zu verändern. Auf diese Weise ist es möglich, auch während des Abfüllvorgangs diesen mit unterschiedlichen Drücken durchzuführen, etwa zunächst mit einem geringeren Druck, anschließend mit einem höheren Druck und schließlich mit einem hohen und konstanten Druck, um das umgeformte Behältnis zu stabilisieren.

Bei einer weiteren vorteilhaften Ausführungsform weisen die Einfülleinrichtungen jeweils eine Ventileinrichtung auf, welche dazu geeignet und bestimmt ist, den Zufluss der Flüssigkeit in die Kunststoffvorformlinge zu steuern. Dabei kann es sich auch bei dieser Ventileinrichtung um die besagte Drosseleinrichtung handeln, es wäre jedoch auch möglich, dass zusätzliche Ventileinrichtungen vorgesehen sind.

Bei einer weiteren vorteilhaften Ausführungsform weist die Einfülleinrichtung ein Düsenelement auf, welches an eine Mündung des Kunststoffvorformlings anlegbar ist, und die Drosseleinrichtung weist ein gegenüber dem Düsenelement bewegliches Abdeckelement auf, wobei durch eine Bewegung des Abdeckelements gegenüber dem Düsenelement ein Austritt der Flüssigkeit aus dem Düsenelement und/oder ein Eintritt der Flüssigkeit in den Kunststoffvorformling beeinflussbar ist.

So kann beispielsweise ein Abdeckelement bzw. ein Abdeckelement in Form eines Dichtstopfens vorgesehen sein, über den das Timing des Produkteintritts in den Kunststoffvorformling gesteuert werden kann. Bevorzugt ist dabei dieses Düsenelement dichtend an den Kunststoffvorformling anlegbar, sodass auch Druck aufbaubar ist. Dabei ist besonders bevorzugt dieses Abdeckelement als Stopfen ausgebildet. Bevorzugt ist dieses Abdeckelement in einer Längsrichtung des Kunststoffvorformlings beweglich. Auf diese Weise kann der Volumenstrom in den Kunststoffvorformling hinein leichter verändert werden. Daneben ist es jedoch auch denkbar, dass eine derartige Drosselung stromaufwärts bezüglich der Einfülleinrichtung bzw. stromaufwärts bezüglich des besagten Düsenelements durchgeführt wird.

Bei einer weiteren vorteilhaften Ausführungsform weist die Vorrichtung eine Antriebseinrichtung zum Bewegen des Abdeckelements und/oder Stopfens gegenüber der Einfülleinrichtung auf und diese Antriebseinrichtung ist bevorzugt eine elektrisch oder (elektro)magnetisch betriebene Antriebseinrichtung. Dabei kann das Abdeckelement bzw. der Dichtstopfen insbesondere über einen Servomotor und/oder einen Elektromagneten bewegt werden. Bevorzugt kann dabei dieses Abdeckelement zwischen zwei vorgegebenen Endpositionen jede beliebige Position anfahren und auf diese Weise bevorzugt das Durchflussvolumen bzw. die Durchflussmenge stufenlos ändern.

Es kann jedoch auch ein Antrieb in Form einer Kurvensteuerung vorgesehen sein und oder ein pneumatischer und/oder hydraulischer Antrieb.

Bei einer bevorzugten Ausführungsform weist die Vorrichtung eine Positionserfassungseinrichtung auf, welche dazu geeignet und bestimmt ist, eine geometrische Position und/oder Wegstrecke des Abdeckelements gegenüber dem Düsenelement zu erfassen. Insbesondere kann es sich dabei um ein Wegmesssystem handeln, beispielsweise ein LVDT (Linear Variable Differential Transformer), ein optisches Wegmesssystem oder ein induktives Wegmesssystem handelt. Dieses Wegmesssystem dient dabei zur Steuerung des Antriebsmittels und so können beliebige Positionen angefahren werden und somit kann auch der Volumenstrom des Produktes beliebig gedrosselt werden.

Bevorzugt erfolgt eine Steuerung und insbesondere eine Regelung der Position des Abdeckelements insbesondere auch in Abhängigkeit von einem gewünschten Durchfluss der Flüssigkeit.

Alternativ wäre es auch möglich, dass diese Drosselung bereits stattfindet, bevor das Produkt in den Füllkopf bzw. die Fülleinrichtung eintritt. Daneben könnten auch andere Drosselarten eingesetzt werden, wie beispielsweise Wirbeldrossel oder -blenden. Dabei könnten derartige Blenden manuell wechselbar sein, oder auch manuell verstellbar sein. Daneben könnten auch druckgeregelte Drosseln oder ähnliche Drosseln eingesetzt werden, gleichgültig ob diese vor oder nach einem Druckspeicher (bevorzugt) eingesetzt werden.

Unter der Abdeckeinrichtung bzw. einem Dichtstopfen wird im Folgenden insbesondere die Einrichtung zur Drosselung des Produktstroms verstanden, welche jedoch nicht unbedingt erst in der Fülleinrichtung stattfinden muss, sondern bereits auch in dem Ringkanal insbesondere über eine separate Drossel bewerkstelligt werden kann.

Bei einer weiteren vorteilhaften Ausführungsform weist die Vorrichtung eine erste Sensoreinrichtung auf, welche wenigstens einen für den Durchfluss der Flüssigkeit durch die Einfülleinrichtung charakteristischen Messwert erfasst. Insbesondere erfasst dabei diese Sensoreinrichtung einen für einen Strömungsquerschnitt und/oder eine Durchflussgeschwindigkeit charakteristischen Messwert.

Bei einer bevorzugten Ausführungsform weist diese Sensoreinrichtung wenigstens eine Druckmesseinrichtung auf. Insbesondere weist die Vorrichtung eine erste und eine zweite Druckmesseinrichtung auf, die insbesondere an verschiedenen Stellen bezüglich des Produktstroms angeordnet sind, um so einen Differenzdruck zu ermitteln.

Bei einer weiteren vorteilhaften Ausführungsform weist das Abdeckelement eine derart gestaltete Außenkontur auf, dass in einem vorgegebenen Arbeitsbereich des Abdeckelements ein im Wesentlichen linearer Zusammenhang zwischen einer Position des Abdeckelements und dem Durchfluss der Flüssigkeit durch die Einfülleinrichtung besteht (bei konstantem Differenzdruck). Auf diese Weise kann zumindest in diesem Arbeitsbereich eine lineare Steuerung des Durchflusses in Abhängigkeit von der Ventil- bzw. Drosselposition erreicht werden.

Besonders bevorzugt ist das Design des Abdeckelements bzw. Dichtstopfens derart ausgeführt, dass die druckeffektive Fläche auf der Rückseite des Abdeckelements derart optimiert ist, dass für die geforderte Ventildynamik keine unrealistisch großen Aktoren benötigt werden, aber der Druck des Mediums das Ventil bevorzugt dennoch schließen kann.

Bei einer bevorzugten Ausführungsform ist der Dichtstopfen derart ausgeführt, dass er keine Tropfenbildung begünstigt. Dies könnte etwa durch eine Tropfen- Kugel- oder Ellipsenform des Dichtstopfens erreicht werden.

Auch kann die Fläche derart ausgestaltet sein, dass durch das Vorbeiströmen des Produkts es zu keinen Verwirbelungen oder größeren Beeinflussungen des Fließverhaltens kommt. Auf der anderen Seite könnte es auch möglich sein, durch das Design des Abdeckelements der Produktströmung, einen Drall oder eine konstante Fließgeschwindigkeit zu vermitteln. Auch wäre eine Zentrierung der Reckstange als Aufgabe des Abdeckelements möglich.

Zum Zentrieren der Reckstange könnte jedoch auch ein separates Bauteil eingesetzt werden, welches im Folgenden als Diffusor bezeichnet wird. Dieser Diffusor bewirkt vorteilhaft eine Verteilung der Flüssigkeit in einer Umfangsrichtung der Einfüllvorrichtung, insbesondere einer Umfangsrichtung bezogen auf die Längsrichtung der zu expandierenden Kunststoffvorformlinge.

Daneben könnte die Kontur des Abdeckelements oder der Drosseleinrichtung des Volumenstroms eine Kontur aufweisen, welche in einem relevanten Arbeitsbereich der Drosseleinrichtung einen möglichst linearen oder quadratischen Zusammenhang zwischen der Ventilposition und dem Durchfluss aufweist, oder zumindest eine Funktion besitzt, welche eine Linearisierung im Rahmen einer Closed Loop Regelung zulässt. Es könnte jedoch hierzu auch ein anderes Bauteil entlang der Strömung des Produkts eingesetzt werden.

Bei einer weiteren Ausgestaltung werden bevorzugt Totwege vermieden und beispielsweise eine Vorbewegung (eine Bewegung ohne Reaktion) bereits vor der eigentlichen Ventilfunktion ausgeführt.

Daneben wäre es auch denkbar, mit der Drosseleinrichtung eine Durchflussmessung zu realisieren. So könnte beispielsweise, wie unten genauer erläutert, eine Messung des Differenzdrucks zwischen der Eingangs- und der Ausgangsseite der Drosseleinrichtung oder eines Dichtstopfens realisiert werden oder auch eine derartige Druckdifferenz gemessen werden an einer geometrisch bestimmten Geometrie, die an einer bestimmten Stelle in der Einfülleinrichtung und/oder dem Ringkanal oder der Zuleitung liegt. Auf diese Weise könnte der Volumenstrom gemessen werden. So können die für den Prozess relevanten Größen, bevorzugt Druck und/oder Volumenstrom einerseits einer Regelschleife andererseits aber auch dem Bediener zur Verfügung gestellt werden.

Bei einer weiteren vorteilhaften Ausführungsform weist der Dichtstopfen bzw. das Abdeckelement auf seiner Rückseite eine derart optimierte Form auf, dass die geforderte Ventildynamik keine unrealistisch großen Aktoren erfordert, aber der Druck des Mediums das Ventil dennoch schließen kann. Dies bedeutet, dass diese Fläche zwar größer als Null ist, aber dennoch klein. Generell könnte ein Druck auch über die Gleichung P1 = F_{Antrieb} / A_{Abde-ckelement} bestimmt werden.

Bei einer weiteren vorteilhaften Ausführungsform ist die Drosseleinrichtung zur Volumenstromverstellung nach einer Druckspeichereinrichtung angeordnet, unabhängig davon, ob diese am festen Anlageteil oder am rotierenden Anlageteil angebracht werden, um Fehler, beispielsweise Druckschwankungen, bei einer Stationsabschaltung oder dergleichen zu verhindern. Bei einer weiteren vorteilhaften Ausführungsform weist die Vorrichtung wenigstens eine und bevorzugt mehrere Durchflussbegrenzer auf. Diese können bewirken, dass bei Leckagen mit Druckspeichern nicht der gesamte Druckspeicher entleert wird, sondern eben eine solche Entleerung verhindert wird. Dabei können derartige Durchflussbegrenzer nach einer bestimmten Abgabemenge den Zulauf sperren. Dies könnte auch über eine softwaretechnische Lösung durchgeführt werden, wobei der Druckverlauf beim Formen der Behältnisse beobachtet wird und aus charakteristischen Merkmalen des Druckverlaufs auf Undichtigkeiten in dem System oder der Flasche geschlossen wird.

Weiterhin wäre es möglich, dass die Druckregelung im System über eine aktiv und schnell steuerbare Pumpe z. B. eine Axialkolbenpumpe erzielt wird, welche bevorzugt nach benötigter Druckdifferenz zu dem Solldruck die Fördermenge erhöht oder reduziert.

Eine andere Möglichkeit bestünde darin, die Druckregelung über eine mehr oder weniger und insbesondere konstante Pumpenleistung und/oder Fördermenge zu realisieren. Daneben könnte über einen Bypass und/oder ein Druckregelventil die benötigte Fördermenge zu- oder abgespeist werden. Dies wäre zwar aus energetischer Sicht weniger vorteilhaft, könnte jedoch hinsichtlich Druckschwankungen bzw. Schnelligkeit des Systems Vorteile bieten.

Bei einer weiteren vorteilhaften Ausführungsform könnte ein Bypass bzw. eine Rückführung in einen Tank oder Ähnliches auf jeden Fall eingebaut werden, um in einem Notausfall das gesamte System drucklos zu bekommen und man könnte weiterhin bereits vorhanden Bauteile nutzen, um die Druckregelung zu integrieren.

Daneben oder alternativ wäre es auch denkbar, dass eine Regelung über den Volumenstrom erfolgt, dass also der Volumenstrom die Regelgröße ist. Mittels einer Rückführung in ein Reservoir wie den Tank ist es bevorzugt möglich, einen überschüssigen Volumenstrom abzuführen.

Auch über eine veränderte Ventilschaltung und eine damit veränderte Fördermenge einer Kolbenpumpe (oder Einspritzpumpen) könnte eine Druckregelung stattfinden.

Bei einer weiteren vorteilhaften Ausführungsform weist die Vorrichtung eine Druckregeleinrichtung auf, welche zur Regelung eines Drucks des in den Kunststoffvorformling einzufüllenden flüssigen Mediums dient. Diese Druckregeleinrichtung könnte dabei beispielsweise als regelbare Pumpe oder als regelbarer Bypass ausgeführt sein.

Wie oben erwähnt, weist die Vorrichtung bevorzugt einen Druckspeicher für das abzufüllende flüssige Medium auf. Dabei könnte sich diese Druckspeichereinrichtung an unterschiedlichen Positionen befinden. So könnte sich die Druckspeichereinrichtung auf dem ortfesten Anlagenteil befinden und in einen Druckringverteiler einspeisen. Hierzu könnten steuerbare Ventile und insbesondere elektrisch steuerbare Ventile zu den einzelnen Fülleinrichtungen vorgesehen sein. Auch wäre es möglich und eventuell sinnvoll, mehrere Ringkanäle und Pumpen einzusetzen, um verschiedene Anforderungen, wie Schnelligkeit und Druckniveau zu realisieren.

Bei einer weiteren Ausgestaltung wäre es auch möglich, neben einer vollständig zentralen Anordnung der Druckerzeugung diese Komponente gänzlich oder zumindest teilweise auf einen beweglichen und insbesondere rotierenden Teil zu platzieren. Dies bedeutet, dass die Kompression des Produktes beispielsweise zentral auf einem ortsfesten Anlagenteil oder auch dezentral auf einem rotierenden Teil oder auch mehrstufig auf beiden Teilen vorgesehen sein kann.

Daneben wäre es auch denkbar, dass die Anordnung eines einzelnen oder mehrerer Druckspeicher auf dem festen oder dem beweglichen bzw. rotierenden oder auf beiden Teilen der Anlage erfolgt. Der oder die Druckspeicher können auf dem rotierenden Teil gemeinsam für alle Umformungsstationen ausgeführt sein, oder aber auch individuell für jede einzelne Formstation.

Bei einer weiteren vorteilhaften Ausführungsform wird eine gesamte oder teilweise Dezentralisierung der benannten Komponenten durchgeführt. Auf diese Weise ist es möglich, dass der Druckringverteiler kein unter Druck stehendes Medium übertragen muss. Daneben sind auch die Leitungslängen zwischen der Druckerzeugung und der Behälterformung reduziert, was sich positiv auf die erreichbaren Drücke und Durchflussraten auswirkt. Die vorgeschlagene Erfindung bietet den Vorteil, dass Systemkosten potenziell geringer sind, als im Vergleich zu bisherigen Konzepten.

Die Zentralisierung der Druckerzeugung hingegen bietet den Vorteil, dass eine Pumpeneinrichtung bei einem Arbeitspunkt arbeitet und auch darauf optimiert werden kann. Auf diese Weise treten weniger ungenutzte Systemressourcen auf.

Weiterhin ist es möglich, dass rotierende Massen und Bauraum auf dem Form- und Füllrad auf ein Minimum reduziert werden. Auf diese Weise kann der Energieverbrauch gesenkt werden, auch eine erforderliche Bremsleistung kann reduziert werden und die Zugänglichkeit kann insgesamt verbessert werden.

Daneben ist es auch möglich, dass Durchflussraten im Wesentlichen durch Leitungswiderstände und ein Druckregelventil limitiert sind. Dies bietet erhebliches Potential die Prozessparameter in einem größeren Bereich zu beeinflussen.

Daneben wird auch ein System für alle Behältergrößen zur Verfügung gestellt, wobei ein nur geringer Ressourcenoverhead auftritt. Daneben ist es auch möglich, die erforderliche Energie zur Behälterformung auf dem rotierenden Teil deutlich zu reduzieren oder sogar entfallen zu lassen.

Die vorliegende Erfindung ist weiterhin auf ein Verfahren zum Expandieren von Kunststoffvorformlingen zu Kunststoffbehältnissen mittels eines flüssigen Mediums gerichtet, wobei mit wenigstens einer und bevorzugt mit wenigstens zwei Umformungsstationen die Kunststoffvorformlinge mit dem flüssigen Medium befüllt und expandiert werden und wobei mit wenigstens einer gemeinsamen Zuführeinrichtung der wenigstens einen und bevorzugt beiden Umformungsstationen das flüssige Medium zugeführt wird und die Umformungsstationen jeweils Einfülleinrichtungen aufweisen (bzw. die wenigstens eine Umformungsstation eine Einfülleinrichtung aufweist, welche das flüssige Medium in die Kunststoffvorformlinge einfüllt/einfüllen. Erfindungsgemäß weisen diese Umformungsstationen und/oder Einfülleinrichtungen jeweils eine Drosseleinrichtung auf, welche wenigstens zeitweise den in die Kunststoffvorformlinge eintretenden Volumenstrom der Flüssigkeit verändern.

Es wird daher auch verfahrensseitig vorgeschlagen, dass eine Drosselung bzw. Steuerung des den Kunststoffvorformlingen zuzuführenden flüssigen Mediums (insbesondere individuell für die einzelnen Umformungsstationen) vorgenommen wird.

Weitere Vorteile und Ausführungsformen ergeben sich aus den beigefügten Zeichnungen.

Darin zeigen:
- Fig. 1: eine schematische Darstellung der Befüllung und Expansion der Behältnisse mittels des Abfüllprodukts;
- Fig. 2: eine Detaildarstellung einer Einfülleinrichtung;
- Fig. 3: eine weitere Darstellung einer Einfülleinrichtung;
- Fig. 4: eine Darstellung eines ersten Anlagenkonzepts zur Befüllung von Kunststoffbehältnissen; und
- Fig. 5: eine weitere Darstellung eines Befüllungskonzepts für Kunststoffbehältnisse.

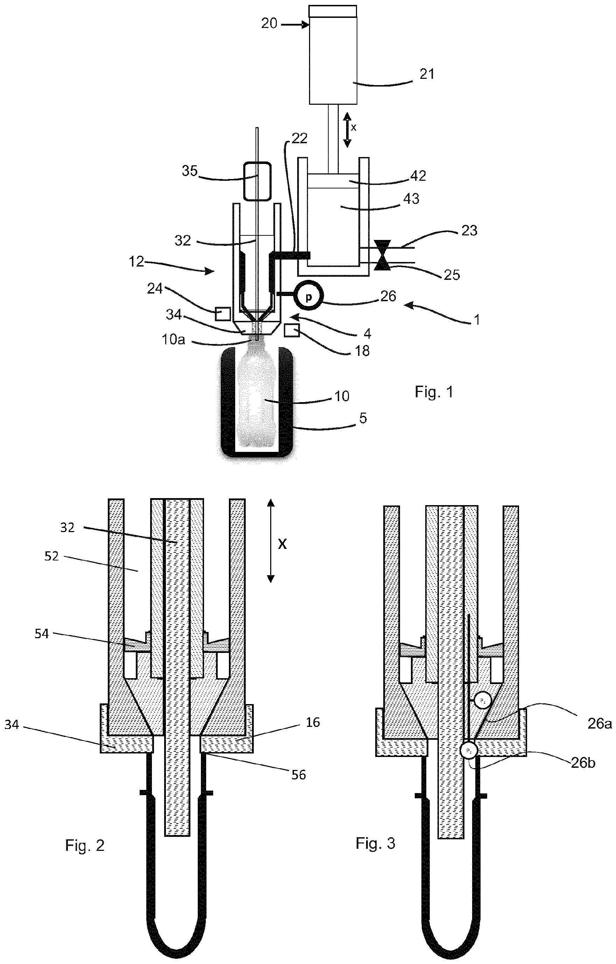

Figur 1 zeigt eine Darstellung einer Vorrichtung zum Expandieren von Behältnissen 10. Dabei weist die Vorrichtung eine mit 20 gekennzeichnete Antriebseinrichtung auf, welche zum Erzeugen einer Bewegung einer Kolbeneinrichtung 42 in x-Richtung dient. Dabei kann es sich beispielsweise um einen Linearmotor handeln, der eine Weglängenmesseinrichtung 21 (nur schematisch gezeigt) aufweist. Mittels dieser Antriebseinrichtung 20 wird eine Kolbeneinrichtung 42 gegenüber einem Kolbenraum 43 bewegt. Auf diese Weise ist es möglich, ein flüssiges Medium M, wie insbesondere die abzufüllende Flüssigkeit zu dem Behältnis 10 zu transportieren.

Das Bezugszeichen 23 kennzeichnet eine Produktzuleitung, wobei die Zuleitung über ein Ventil 25 gesperrt werden kann. Die Flüssigkeit wird in eine in ihrer Gesamtheit mit 12 bezeichnete Einfülleinrichtung gefördert. Diese Einfülleinrichtung 12 weist ein Anlageelement 34 auf, welches an einer Mündung 10a der Kunststoffbehältnisse anlegbar ist. Das Bezugszeichen 32 kennzeichnet eine Reckstange, welche in das Innere des Kunststoffbehältnisses 10 einführbar ist, um dieses in dessen Längsrichtung zu dehnen. Das Bezugszeichen 35 kennzeichnet einen entsprechenden Reckstangenantrieb. Das Bezugszeichen 22 kennzeichnet eine Verbindungsleitung zwischen dem Kolbenraum 43 und der Einfülleinrichtung. Das Bezugszeichen 24 kennzeichnet grob schematisch eine Druckregeleinrichtung.

Das Bezugszeichen 4 kennzeichnet schematisch eine Drosseleinrichtung, die dazu geeignet und bestimmt ist, den Zufluss des Mediums in das Kunststoffbehältnis 10 zu steuern. Das Bezugszeichen 26 kennzeichnet eine Druckmesseinrichtung.

Das Kunststoffbehältnis 10 wird innerhalb einer Umformungsform 5 expandiert und der Vorgang führt so zu dem fertig umgeformten und befüllten Behältnis.

Figur 2 zeigt eine Detaildarstellung der Fülleinrichtung. Dabei bezieht sich das Bezugszeichen 52 auf eine Kolbenstange, welche dazu geeignet und bestimmt ist, ein in seiner Gesamtheit mit 16 bezeichnetes Abdeckelement in der Richtung x nach oben und unten zu bewegen. Diese Kolbenstange kann wiederum von einem elektrischen Antrieb angetrieben sein. Weiterhin ist es möglich, dass die oben bezeichnete Reckstange 32 innerhalb dieser Kolbenstange geführt wird.

Das Bezugszeichen 54 kennzeichnet eine Diffusoreinrichtung, welche dazu geeignet und bestimmt ist, das einzufüllende fließfähige Medium gleichmäßig (in Umfangsrichtung bezogen auf die Längsrichtung des Kunststoffvorformlings) zu verteilen. Das Bezugszeichen 34 kennzeichnet ein Düsenelement, welches wie oben gezeigt an die Mündung des Behältnisses anlegbar ist. Dabei bezeichnet das Bezugszeichen 56 genauer den Dichtungsbereich zwischen diesem Düsenelement 34 und der Preform bzw. dem hieraus entstehenden Kunststoffbehältnis. Das Düsenelement ist hier auch das oben erwähnte Anlageelement. Das Bezugszeichen 18 kennzeichnet grob schematisch eine Erfassungseinrichtung, welche eine Position des Anlageelements bzw. des Düsenelements erfasst und insbesondere eine Position in der Längsrichtung des zu expandierenden Behältnisses.

Figur 3 zeigt eine weitere Detaildarstellung der Fülleinrichtung. Hierbei sind auch zwei Druckmesseinrichtungen 26a und 26b (welche die Drücke P1 und P2 messen) dargestellt. Diese dienen dazu, den Differenzdruck zwischen einem Austrittsbereich des flüssigen Mediums (P2) und dem Bereich innerhalb der Fülleinrichtung (P1) zu bestimmen. Anhand dieses Druckunterschiedes ist es möglich, die Durchflussmenge in dem Kunststoffvorformling festzulegen.

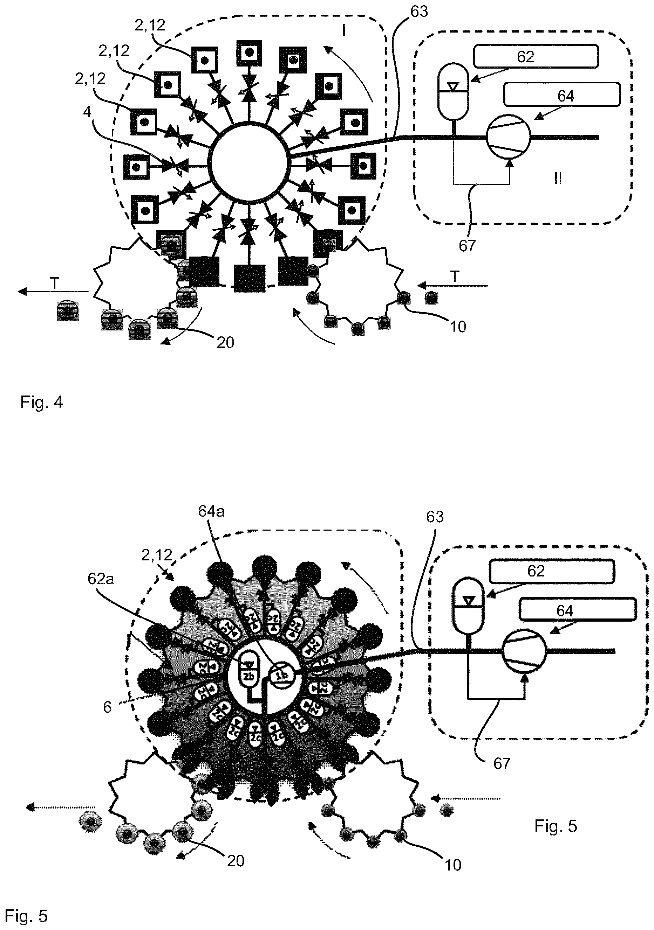

Figur 4 zeigt ein erstes mögliches Anlagenkonzept. Bei dieser Ausgestaltung ist eine Druckerzeugungseinrichtung wie eine Pumpe 64 auf einem stehenden Teil der Anlage angeordnet. Jedenfalls befindet sich eine Druckspeichereinrichtung 62 in dem stehenden Teil II der Anlage. Über eine Leitung 63 wird das fließfähige Medium zu einem Reservoir bzw. auch zu einem Ringkanal 6 auf dem rotierenden Teil I der Anlage gefördert. Ausgehend von dem Ringkanal 6 werden eine Vielzahl von Umformungsstationen 2 und Einfülleinrichtungen 12 versorgt. Diese Umformungsstationen 2 sind dabei gleichzeitig auch die Einfülleinrichtungen 12.

Die Bezugszeichen 4 kennzeichnen jeweils schematisch Drosseleinrichtungen, welche die Zufuhr der Flüssigkeit an die Behältnisse steuern. Die Kunststoffvorformlinge 10 werden entlang des Transportpfads T zugeführt und in der Anlage befüllt und gleichzeitig zu Kunststoffbehältnissen 20 umgeformt, um anschließend wieder abgeführt werden zu können.

Figur 5 zeigt eine weitere Ausgestaltung eines Anlagenkonzepts. Auch hier sind die Pumpeneinrichtung 64 und die Druckspeichereinrichtung 62 auf dem stehenden Teil angeordnet. Daneben kann auch eine Feedbackeinrichtung 67 vorgesehen sein, die eine automatische Regulierung der Pumpenleistung abhängig von Prozessgrößen ermöglicht. Solche Prozessgrößen können z. B. der Volumenstrom oder der Druck sein.

Bei der in Figur 5 gezeigten Variante wäre es auch möglich, die Pumpeneinrichtung und/oder den Druckspeicher direkt auf dem rotierenden Anlageteil zu installieren. Daneben wäre es möglich, wie genauer in Figur 5 gezeigt, sowohl eine Pumpeneinrichtung 64 und eine Druckspeichereinrichtung 62 auf dem stationären Teil zu installieren als auch zusätzlich entsprechende Pumpeneinrichtungen 64a und Druckspeichereinrichtungen 62a auf dem rotierenden Teil der Anlage. Daneben können auch alternativ oder zusätzlich weitere Druckspeichereinrichtungen vorgesehen sein, welche den einzelnen Umformungsstationen und/oder Einfülleinrichtungen zugeordnet sind.

### Bezugszeichenliste

- 1: Vorrichtung
- 2: Umformungsstation
- 4: Drosseleinrichtung
- 5: Umformungsform
- 6: Ringkanal
- 10: Behältnisse
- 12: Einfülleinrichtung
- 12: Einfülleinrichtung
- 16: Abdeckelement
- 18: Positionserfassungseinrichtung
- 20: Antriebseinrichtung
- 21: Weglängenmesseinrichtung
- 23: Produktzuleitung
- 24: Druckregeleinrichtung
- 25: Ventil
- 26: Druckmesseinrichtung
- 32: Reckstange
- 34: Anlageelement, Düsenelement
- 35: Reckstangenantrieb
- 42: Kolbeneinrichtung
- 43: Kolbenraum
- 52: Kolbenstange
- 54: Diffusoreinrichtung
- 56: Dichtungsbereich
- 62: Druckspeichereinrichtung
- 63: Leitung
- 64: Pumpeneinrichtung
- 67: Feedbackeinrichtung
- 10a: Mündung der Kunststoffbehältnisse
- 62a: Druckspeichereinrichtung
- 64a: Pumpeneinrichtung
- M: flüssiges Medium
- P1: Druckmesseinrichtung
- P2: Druckmesseinrichtung
- T: Transportpfad

## Patentansprüche

1. Vorrichtung (1) zum Expandieren von Kunststoffvorformlingen (10) zu Kunststoffbehältnissen mittels eines flüssigen Mediums mit mindestens einer Umformungsstation (2), welche die Kunststoffvorformlinge (10) mit dem flüssigen Medium befüllt und expandiert mit wenigstens einer gemeinsamen Zuführeinrichtung (6) welche der mindestens einen Umformungsstation (2) das flüssige Medium zuführt, wobei die mindestens eine Umformungsstation (2) eine Einfülleinrichtung (12) aufweist, welche das flüssige Medium in die Kunststoffvorformlinge (10) einfüllt,
wobei die mindestens eine Umformungsstation (2) und/oder die Einfülleinrichtung (12) eine Drosseleinrichtung (4) aufweist, welche dazu geeignet und bestimmt ist, den in die Kunststoffvorformlinge (10) eintretenden Volumenstrom der Flüssigkeit zu verändern und **dadurch gekennzeichnet, dass** die Vorrichtung (1) eine erste Sensoreinrichtung aufweist, welche wenigstens einen für den Durchfluss der Flüssigkeit durch die Einfülleinrichtung (12) charakteristischen Messerwert erfasst, wobei es sich bei dem charakteristischen Messwert um einen für einen Strömungsquerschnitt und/oder eine Durchflussgeschwindigkeit charakteristischen Messwert handelt.

2. Vorrichtung (1) nach Anspruch 1,
**dadurch gekennzeichnet, dass**
die Drosseleinrichtung (4) dazu geeignet ist, eine Strömungsgeschwindigkeit und/oder ein Druckniveau der in den Kunststoffvorformling (10) eintretenden Flüssigkeit zu verändern.

3. Vorrichtung (1) nach wenigstens einem der vorangegangenen Ansprüche,
**dadurch gekennzeichnet, dass**
die Einfülleinrichtungen (12) jeweils eine Ventileinrichtung (25) aufweisen, welche dazu geeignet und bestimmt sind, den Zufluss der Flüssigkeit in die Kunststoffvorformlinge (10) zu steuern.

4. Vorrichtung (1) nach wenigstens einem der vorangegangenen Ansprüche,
**dadurch gekennzeichnet, dass**
die Einfülleinrichtung (12) ein Düsenelement (34) aufweist, welches an eine Mündung (10a) des Kunststoffvorformlings anlegbar ist und die Drosseleinrichtung (4) ein gegenüber dem Düsenelement (34) bewegliches Abdeckelement (16) aufweist, wobei durch eine Bewegung des Abdeckelements (16) gegenüber dem Düsenelement (34) ein Austritt der Flüssigkeit aus dem Düsenelement (34) beeinflussbar ist.

5. Vorrichtung (1) nach Anspruch 4,
**dadurch gekennzeichnet, dass**
die Vorrichtung eine Antriebseinrichtung zum Bewegen des Abdeckelements (16) gegenüber dem Düsenelement (34) aufweist und diese Antriebseinrichtung eine elektrisch und/oder elektromagnetisch betriebene Antriebseinrichtung ist.

6. Vorrichtung nach wenigstens einem der vorangegangenen Ansprüche,
**dadurch gekennzeichnet, dass**
die Vorrichtung eine Positionserfassungseinrichtung (18) aufweist, welche dazu geeignet und bestimmt ist, eine geometrische Position des Abdeckelements (16) gegenüber dem Düsenelement (34) wenigstens mittelbar zu erfassen.

7. Vorrichtung (1) nach dem vorangegangenen Anspruch,
**dadurch gekennzeichnet, dass**
die Sensoreinrichtung wenigstens eine Druckmesseinrichtung (26) aufweist.

8. Vorrichtung nach wenigstens einem der vorangegangenen Ansprüche 4 - 7,
**dadurch gekennzeichnet, dass**
das Abdeckelement (16) eine derart gestaltete Außenkontur aufweist, dass in einem vorgegebenen Arbeitsbereich des Abdeckelements (16) ein im Wesentlichen linearer Zusammenhang zwischen einer Position des Abdeckelements (16) und dem Durchfluss der Flüssigkeit durch die Einfülleinrichtung (12) besteht.

9. Vorrichtung nach wenigstens einem der vorangegangenen Ansprüche,
**dadurch gekennzeichnet, dass**
die Vorrichtung eine Druckregeleinrichtung (24) zur Regelung eines Drucks des in den Kunststoffvorformling (10) einzufüllenden flüssigen Mediums aufweist.

10. Verfahren (1) zum Expandieren von Kunststoffvorformlingen (10) zu Kunststoffbehältnissen mittels eines flüssigen Mediums wobei mit mindestens einer Umformungsstation (2), die Kunststoffvorformlinge (10) mit dem flüssigen Medium befüllt und expandiert werden und wobei mit wenigstens einer gemeinsamen Zuführeinrichtung (6) der mindestens einen Umformungsstation (2) das flüssige Medium zugeführt wird und die mindestens eine Umformungsstation (2) eine Einfülleinrichtung (12) aufweist, welche das flüssige Medium in die Kunststoffvorformlinge (10) einfüllt,
wobei die mindestens eine Umformungsstation (2) und/oder die Einfülleinrichtung (12) jeweils eine Drosseleinrichtung (4) aufweist, welche wenigstens zeitweise den in die Kunststoffvorformlinge (10) eintretenden Volumenstrom der Flüssigkeit verändert und **dadurch gekennzeichnet, dass** eine erste Sensoreinrichtung vorgesehen ist, welche wenigstens einen für den Durchfluss der Flüssigkeit durch die Einfülleinrichtung (12) charakteristischen Messerwert erfasst, wobei es sich bei dem charakteristischen Messwert um einen für einen Strömungsquerschnitt und/oder eine Durchflussgeschwindigkeit charakteristischen Messwert handelt.

11. Verfahren nach Anspruch 10,
**dadurch gekennzeichnet, dass**
eine Druckregelung mittels einer aktiven und/oder schnell steuerbaren Pumpe erfolgt.

12. Verfahren nach Anspruch 10,
**dadurch gekennzeichnet, dass**
eine Druckregelung mittels einer im Wesentlichen konstanten Pumpleistung und/oder einer im Wesentlichen konstanten Fördermenge erfolgt.

13. Verfahren nach wenigstens einem der vorangegangenen Ansprüche,
**dadurch gekennzeichnet, dass**
eine Zu- oder Abspeisung einer Fördermenge erfolgt, und bevorzugt diese Zu- oder Abspeisung mittels eines Bypasses und/oder eines Druckregelventils erfolgt.

14. Verfahren nach wenigstens einem der vorangegangenen Ansprüche,
**dadurch gekennzeichnet, dass**
wenigstens zeitweise eine Rückführung der Flüssigkeit in ein Reservoir erfolgt.

## Claims

1. Apparatus (1) for expanding plastics material parisons into plastics material containers (10) by means of a liquid medium, with at least one transforming station (2) which fills and expands the plastics material parisons (10) with the liquid medium, with at least one common delivery device (6) which delivers the liquid medium to the at least one transforming station (2), wherein the at least one transforming station (2) has a filling device (12) which fills the liquid medium into the plastics material parisons (10), wherein the at least one transforming station (2) and/or the filling device (12) has a throttle device (4) which is suitable and intended for changing the volume flow of the liquid entering the plastics material parisons (10) and
**characterised in that**
the apparatus (1) has a first sensor device which detects a measured value which is characteristic for the through flow of the liquid through the filling device (12), wherein the characteristic measured value is a measured value which is characteristic for a flow cross-section and/or a flow rate.

2. Apparatus (1) according to claim 1,
**characterised in that**
the throttle device (4) is suitable to change a flow speed and/or a pressure level of the liquid entering the plastics material parison (10).

3. Apparatus (1) according to at least one of the preceding claims,
**characterised in that**
the filling devices (12) in each case have a valve device (25) which are suitable and intended to control the inflow of the liquid into the plastics material parisons (10).

4. Apparatus (1) according to at least one of the preceding claims,
**characterised in that**
the filling device (12) has a nozzle element (34) which can be placed onto a mouth (10a) of the plastics material parison and the throttle device (4) has a cover element (16) which is movable relative to the nozzle element (34), wherein an exit of the liquid from the nozzle element (34) can be influenced by a movement of the cover element (16) relative to the nozzle element (34).

5. Apparatus (1) according to claim 4,
**characterised in that**
the apparatus has a driving device for movement of the cover element (16) relative to the nozzle element (34) and this driving device is an electrically and/or electromagnetically operated driving device.

6. Apparatus according to at least one of the preceding claims,
**characterised in that**
the apparatus has a position detecting device (18) which is suitable and intended to at least indirectly detect a geometric position of the cover element (16) relative to the nozzle element (34).

7. Apparatus according to at least one of the preceding claims,
**characterised in that**
the sensor device has at least one pressure measuring device (26).

8. Apparatus according to at least one of the preceding claims 4-7,
**characterised in that**
the cover element (16) has an external contour configured in such a way that in a predetermined working range of the cover element (16) there is a substantially linear relationship between a position of the cover element (16) and the flow of the liquid through the filling device (12).

9. Apparatus according to at least one of the preceding claims,
**characterised in that**
the apparatus has a pressure regulating device (24) for regulating a pressure of the liquid medium to be introduced into the plastics material parison (10).

10. Method (1) for expanding plastics material parisons (10) into plastics material containers by means of a liquid medium, wherein with at least one transforming station (2) the plastics material parisons (10) are filled and expanded with the liquid medium, and wherein with at least one common delivery device (6) the liquid medium is delivered to the at least one transforming station (2) and the at least one transforming station (2) has a filling device (12) which fills the liquid medium into the plastics material parisons (10), wherein the at least one transforming station (2) and/or the filling device (12) in each case has a throttle device (4) which at least at times changes the volume flow of the liquid entering the plastics material parisons (10) and
**characterised in that**
at least one first sensor device is provided which detects at least one measured value which is characteristic for the through flow of the liquid through the filling device (12), wherein the characteristic measured value is a measured value which is characteristic for a flow cross-section and/or a flow rate.

11. Method according to claim 10,
**characterised in that**
a pressure regulation takes place by means of an active or quickly controllable pump.

12. Method according to claim 10,
**characterised in that**
a pressure regulation takes place by means of a substantially constant pump output and/or a substantially constant amount conveyed.

13. Method according to at least one of the preceding claims,
**characterised in that**
a delivery or discharge of an amount conveyed takes place, and this delivery or discharge preferably takes place by means of a bypass and/or a pressure regulating valve.

14. Method according to at least one of the preceding claims,
**characterised in that**
a return of the liquid into a reservoir takes place at least at times.

## Revendications

1. Dispositif (1) destiné à dilater des préformes en plastique (10) pour en faire des récipients en plastique au moyen d'un milieu fluide avec au moins une station de formage (2), laquelle remplit et dilate les préformes en plastique (10) avec le milieu fluide avec au moins un équipement d'amenée (6) commun, lequel amène le milieu fluide à la au moins une station de formage (2), dans lequel la au moins une station de formage (2) présente un équipement de remplissage (12), lequel verse le milieu fluide dans les préformes en plastique (10), dans lequel la au moins une station de formage (2) et/ou l'équipement de remplissage (12) présente un équipement d'étranglement (4), lequel est adapté et déterminé pour modifier le débit volumétrique du fluide entrant dans les préformes en plastique (10) et
**caractérisé en ce que**
le dispositif (1) présente un premier équipement de capteur, lequel saisit au moins une valeur mesurée caractéristique du débit du fluide à travers l'équipement de remplissage (12), dans lequel la valeur mesurée caractéristique est une valeur mesurée caractéristique d'une section transversale d'écoulement et/ou d'une vitesse de débit.

2. Dispositif (1) selon la revendication 1,
**caractérisé en ce que**
l'équipement d'étranglement (4) est adapté pour modifier une vitesse d'écoulement et/ou un niveau de pression du fluide entrant dans les préformes en plastique (10).

3. Dispositif (1) selon au moins l'une des revendications précédentes,
**caractérisé en ce que**
les équipements de remplissage (12) présentent respectivement un équipement de vanne (25), lequel est adapté et déterminé pour guider l'afflux du fluide dans les préformes en plastique (10).

4. Dispositif (1) selon au moins l'une des revendications précédentes,
**caractérisé en ce que**
l'équipement de remplissage (12) présente un élément de buse (34), lequel peut être appliqué contre un orifice (10a) de la préforme en plastique et l'équipement d'étranglement (4) présente un élément de recouvrement (16) mobile par rapport à l'élément de buse (34), dans lequel une sortie du fluide depuis l'élément de buse (34) peut être influencé par un déplacement de l'élément de recouvrement (16) par rapport à l'élément de buse (34).

5. Dispositif (1) selon la revendication 4,
**caractérisé en ce que**
le dispositif présente un équipement d'entraînement pour déplacer l'élément de recouvrement (16) par rapport à l'élément de buse (34) et cet équipement d'entraînement est un équipement d'entraînement fonctionnant de façon électrique et/ou électromagnétique.

6. Dispositif selon au moins l'une des revendications précédentes,
**caractérisé en ce que**
le dispositif présente un équipement de saisie de position (18), lequel est adapté et déterminé pour saisir au moins indirectement une position géométrique de l'élément de recouvrement (16) par rapport à l'élément de buse (34).

7. Dispositif (1) selon la revendication précédente,
**caractérisé en ce que**
l'équipement de capteur présente au moins un équipement de mesure de pression (26).

8. Dispositif selon au moins l'une des revendications précédentes 4 à 7,
**caractérisé en ce que**
l'élément de recouvrement (16) présente un contour extérieur conçu de telle sorte que dans une zone de travail prédéfinie de l'élément de recouvrement (16), il existe un lien essentiellement linéaire entre une position de l'élément de recouvrement (16) et le débit du fluide à travers l'équipement de remplissage (12).

9. Dispositif selon au moins l'une des revendications précédentes,
**caractérisé en ce que**
le dispositif présente un équipement de régulation de pression (24) pour réguler une pression du milieu fluide à verser dans la préforme en plastique (10).

10. Procédé (1) destiné à dilater des préformes en plastique (10) pour en faire des récipients en plastique au moyen d'un milieu fluide, dans lequel avec au moins une station de formage (2), les préformes en plastique (10) sont remplies et dilatées avec le milieu fluide et dans lequel, avec au moins un équipement d'amenée (6) commun de la au moins une station de formage (2), le milieu fluide est amené à la au moins une station de formage (2) et la au moins une station de formage (2) présente un équipement de remplissage (12), lequel verse le milieu fluide dans les préformes en plastique (10), dans lequel la au moins une station de formage (2) et/ou l'équipement de remplissage (12) présente respectivement un équipement d'étranglement (4), lequel modifie au moins temporairement le débit volumétrique du fluide entrant dans les préformes en plastique (10) et
**caractérisé en ce que**
un premier équipement de capteur est prévu, lequel saisit au moins une valeur mesurée caractéristique du débit du fluide à travers l'équipement de remplissage (12), dans lequel la valeur mesurée caractéristique est une valeur mesurée caractéristique d'une section transversale d'écoulement et/ou d'une vitesse de débit.

11. Procédé selon la revendication 10,
**caractérisé en ce que**
une régulation de pression se produit au moyen d'une pompe pouvant être commandée activement et/ou rapidement.

12. Procédé selon la revendication 10,
**caractérisé en ce que**
une régulation de pression se produit au moyen d'une puissance de pompage essentiellement constante et/ou d'un débit de décharge essentiellement constant.

13. Procédé selon au moins l'une des revendications précédentes,
**caractérisé en ce que**
une augmentation ou une décrue d'un débit de décharge se produit et de préférence cette augmentation ou décrue se produit au moyen d'une dérivation et/ou d'une vanne de régulation de pression.

14. Procédé selon au moins l'une des revendications précédentes,
**caractérisé en ce que**
un retour du fluide jusque dans un réservoir se produit au moins temporairement.
